# EUROPEAN PATENT SPECIFICATION

(11) **EP 3 516 934 B1**
(45) Date of publication and mention of the grant of the patent: **04.11.2020**
(21) Application number: 17809052.8
(22) Date of filing: 19.09.2017
(51) Int. Cl.: H05B 47/10, H02J 3/00, H05B 47/11, H05B 47/16

(54) **LIGHTING SYSTEM CONFIGURED TO SUPPLY POWER TO AT LEAST ONE POWER SUPPLY UNIT CAPABLE OF SUPPLYING POWER TO ELECTRONIC DEVICES OR SYSTEMS**
BELEUCHTUNGSSYSTEM ZUR STROMVERSORGUNG MINDESTENS EINER STROMVERSORGUNGSEINHEIT MIT FÄHIGKEIT ZUR STROMVERSORGUNG ELEKTRONISCHER VORRICHTUNGEN ODER SYSTEME
SYSTÈME D'ÉCLAIRAGE CONÇU POUR ALIMENTER AU MOINS UN BLOC D'ALIMENTATION POUVANT ALIMENTER DES DISPOSITIFS OU DES SYSTÈMES ÉLECTRONIQUES

(30) Priority: 19.09.2016 IT 201600093792
(43) Date of publication of application: 31.07.2019
(73) Proprietor: Alosys Communications S.r.l., 00167 Roma (IT); Mariani, Adriana, 02010 Borgo Velino (RI) (IT)
(72) Inventor: MARIANI, Adriana, 02010 Borgo Velino (RI) (IT); PIGNATELLI, Eugenio, 00167 Roma (IT); PIGNATELLI, Giovanni Battista, 00167 Roma (IT)
(74) Representative: Tiburzi, Andrea
(86) International application number: PCT/IT2017/000201
(87) International publication number: WO 2018/051381

(56) References cited:
- EP-A1- 0 584 164
- US-A- 4 500 796

## Description

The present invention relates to a lighting system configured to supply power to at least one power supply unit capable of supplying power to electronic devices or systems.

More specifically, the invention relates to the structure of a lighting system that comprises at least one power supply unit and is configured to supply power to said at least one power supply unit, irrespectively whether said lighting system is turned off or on.

One or more electronic devices or systems for supplying of respective services can be connected to said at least power supply unit, such as a video surveillance system, a WiFi system, a SoS column, a display device for displaying information.

Currently, there are known lighting systems by means of which it is possible to supply power to a power supply unit.

A first lighting system of known type comprises:
- a plurality of street lamps, each of which comprises a pole and an illuminating body,
- a three-phase power supply network for supplying sad plurality of street lamps, where said three-phase power supply network comprises a first phase, a second phase, a third phase, and a neutral,
- a contactor, arranged in a cabinet, comprising a respective switch for each phase, configured to open and close said switches, so as to allow the flow of electric current from said power supply network to illuminating bodies of the respective street lamps,
- crepuscular switch for controlling said contactor so as to open and close said switches,
- a power supply unit for supplying power to electronic devices or electronic systems.

In particular, the crepuscular switch is configured to turn on the illuminating bodies of the respective street lamps when the intensity of the solar radiation is less than a predetermined threshold.

Consequently, the power supply unit for supplying power electronic devices is only powered when the contactor, controlled by the crepuscular switch, closes the switches and allows the flow of electric current toward the illuminating bodies of the respective street lamps.

Hence, the power supply unit is powered only during night time.

In particular, said power supply unit comprises an accumulator.

A disadvantage of said first lighting system is that it is necessary that said accumulator is sized depending on the electronic devices or systems to be powered.

A second disadvantage is due to the fact that said accumulator must be periodically replaced.

A further disadvantage is that, although the accumulator has an autonomy in order to operate a predetermined number of hours, such autonomy may be unsecured.

In fact, such an accumulator could operate for a number of hours less than said predetermined number of hours, depending on the number of electronic devices or systems connected to said power supply unit and to the type of said electronic devices or systems.

A second lighting system of known type, different from the first lighting system, is not provided with a contactor and comprises a crepuscolar switch for each illuminating body, arranged close to the respective illuminating body.

Although with such lighting system the power supply unit is powered during both day and night, a first disadvantage is that the structure of such lighting system is such that the three-phase power supply network is under voltage during both day and night.

A second disadvantage of said second lighting system is due to the need to install a crepuscolar switch for each illuminating body, with the resulting costs associated with both the number of crepuscolar switches (to be connected to respective illuminating bodies) and their installation.

A third lighting system of known type, different from the first lighting system of known type, is not provided with a contactor and comprises a plurality of transmitting and receiving devices, each of which is connected to the illuminating body of a respective street lamp and is configured to transmit and receive signals containing information about turning on/off of said illuminating body, as well as a transmitting and receiving module, arranged within a cabinet, configured to transmit and receive signals to and from said transmission and receiving means to turn on or turn off said illuminating bodies.

Although with such lighting system the power supply unit is powered during both by day and night, a first disadvantage is that the structure of such lighting system is such that the three-phase power supply network is under voltage during both day and night.

A further disadvantage of said third lighting system is the complexity of the structure, with the resulting costs.

A further system of known type to supply power to a load is disclosed in the European patent EP 0584 164 B1.

Said system relates to a system of electrical outlets and connectors, each of which has a plurality of contacts for a power supply unit, as well as a first type of connector and a second type of connector.

Each outlet has switching means arranged in a permanent manner to electrically connect two contacts of the outlet itself, where said switching means are operable by the connection or disconnection of the first type of connector to/from the outlet, while the connection or the disconnection of the second type of connector to/from the outlet let the electric connection of the two contact is intact.

In particular, sad system comprises four busbar, independent to each other: a first busbar constituting a switching line, a second busbar connected to a power supply line, a third busbar connected to the neutral line and a fourth busbar constituting the earth line.

More particularly, the first busbar and the fourth busbar permit to arrange a plurality of contacts, while the second busbar and the third busbar permit to the electric current to reach the load.

In other words, said system of known type can be considered a monophase system to which a switching line is added.

A disadvantage of said system of known type is that it is necessary to add a first busbar (constituting the switching line) for withdrawing electric current from sockets arranged in predetermined positions. This make the structure of said system of known type complex, with the resulting costs.

In a variant, said system of known type can incorporate, in addition to the above said busbars, further busbar or lines of a of a three-phase system.

However, in such variant, the structure of said system is extremely complex, due to the addition of said further busbars or said lines of the three-phase system, and to a possible addition of further switching line.

Consequently, the cost of producing such variant increases significantly.

Oject of the present invention is to overcome said disadvantages providing a simple and low cost lighting system capable of supplying power to one or more power supply units, during day and night, without the three-phase power supply being fully powered during both day and night.

It is therefore object of the present invention a lighting system comprising:
- one or more first street lamps, each of which comprises a first pole and a first illuminating body,
- a master switch,
- a three-phase power supply network for supplying power to said one or more first street lamps, where said three-phase power supply network comprises at least one first power supply line, a second power supply line and a third power supply line, where said first power supply line and said second power supply line are connected to said master switch in such a way that, when said master switch is activated, said first power supply line and said second power supply line are always active, so that a first voltage is always present between said first power supply line and said second power supply line;
- a contactor, connected to said three-phase power supply network, by means of said master switch, and comprising at least one switch to open/close said third power supply line, where said contactor is configured to open and close said at least one switch, so as to respectively move from an open state, in which it interrupts the flow of electric current from said three-phase power supply network towards each first illuminating body, to a closed state, in which it allows the flow of electric current from said three-phase power supply network towards each first illuminating body, and vice versa;
- a control device configured to control the opening and closing of said at least one switch of said contactor depending on an intensity of solar radiation and/or at a predetermined time;
- at least one power supply unit to supply power to electronic devices or systems,
- one or more relays, each of which is connected in series to a respective first illuminating body and is configured to switch from an open state, in which each of said relays interrupts the flow of electric current from said three-phase power supply network towards the respective first illuminating body, to a closed state, in which each of said relays allows the flow of electric current from said three-phase power supply network towards the respective illuminating body, and vice versa;
- one or more control elements, each of which is configured to control the opening and closing of a respective relay.

In particular, said at least one power supply unit is connected to said first power supply line and to said second power supply line, each relay is connected in series to said second power supply line or to said first power supply line, each control element is connected to said first power supply line and to said third power supply line or to said second power supply line and to said third power supply line and is configured to control the closing of the respective relay, when a second voltage is present between said first power supply line and said third power supply line or between said second power supply line and said third power supply line.

In a first embodiment, said three-phase power supply network comprises a first phase, a second phase and a neutral, where said first power supply line is said neutral, said second power supply line is said first phase and said third power supply line is said second phase, so that said first voltage is present between said neutral and said first phase, said at least one power supply unit is connected to said neutral and to said first phase, each relay is connected in series to said first phase, and each control element is connected to said neutral and to said second phase and is configured to control the closing of the respective relay, when a second voltage is present between said neutral and said second phase.

In a second embodiment, said three-phase power supply network comprises a first phase, a second phase, and a third phase, where said first power supply line is said first phase, said second power supply line is said second phase, and said third power supply line is said third phase, so that said first voltage is present between said first phase and said second phase, said at least one power supply unit is connected to said first phase and to said second phase, each relay is connected in series to said second phase, each control element is connected to said first phase and said third phase or to said second phase and to said third phase and is configured to control the closing of the respective relay, when a second voltage is present between said first phase and said third phase or between said second phase and said third phase.

With reference to the control device, in a first alternative, said control device can comprise a crepuscular switch configured to open said contactor when the intensity of solar radiation is higher than a predetermined threshold and close said contactor when the intensity of solar radiation is lower than said predetermined threshold.

In a second alternative, said control device can comprise an astronomic time switch configured to open said contactor at a predetermined time and to close said contactor at a predetermined further time.

In a third alternative, said control device can comprise a crepuscular switch configured to open said contactor when the intensity of solar radiation is higher than a predetermined threshold and close said contactor when the intensity of solar radiation is lower than said predetermined threshold, and an astronomic time switch configured to open said contactor at a predetermined time and to close said contactor at a predetermined further time, where said crepuscular switch and said astronomic time switch are connected in parallel in such a way that said control device opens/closes said contactor depending on the intensity of the solar radiation or local time.

According to the invention, said lighting system can comprise for each first street lamp a respective first junction box and a respective first terminal board, where each first terminal board comprises a first input for receiving said first power supply line, a second input for receiving said second power supply line, a third input for receiving said third power supply line, as well as a first output to allow the output of said first power supply line, a second output to allow the output of said second power supply line and a third output to allow the output of said third power supply line.

In a first alternative, each first terminal board can be arranged within a respective first pole, said at least one power supply unit can be positioned between a respective first terminal board and a respective relay, and each relay can be arranged between the respective first terminal board and the respective first illuminating body.

In a second alternative, each first terminal board and the respective relay can be arranged within a respective first junction box, where each first terminal board and the respective relay are positioned within a respective waterproof casing, and said at least one power supply unit can be positioned between a respective first terminal and a respective relay.

The present invention will be now described, for illustrative, but not limitative purposes, according to its embodiment, making particular reference to the enclosed figures, wherein:
Figure 1 shows a first embodiment of the lighting system according to the invention;
Figure 2 shows a second embodiment of the lighting system according to the invention.

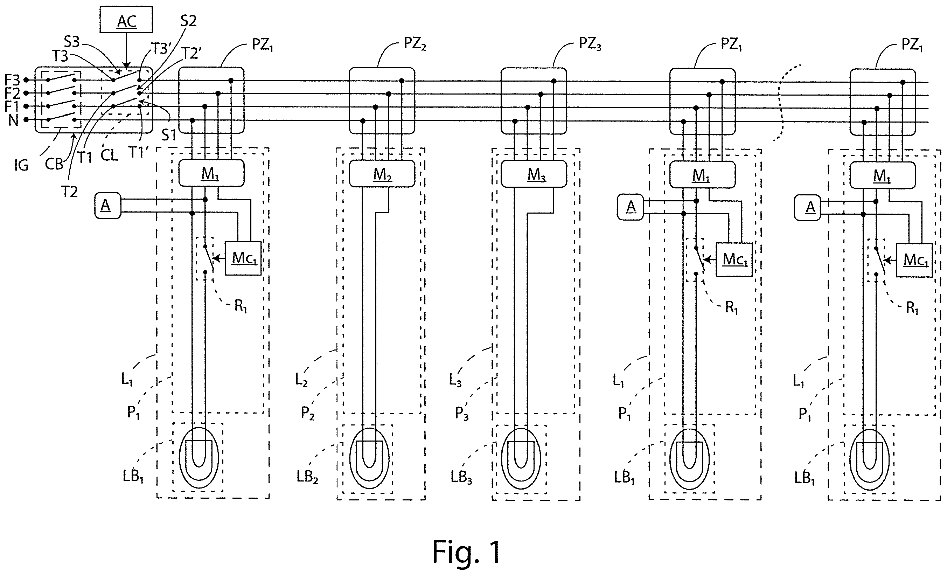

With particular reference to Figure 1, a first embodiment of the lighting system configured to supply power to a supply power unit capable of supplying power electronic devices or systems is disclosed.

In the first embodiment being disclosed, said lighting system comprises:
- a plurality of street lamps L₁, each of which comprises a first pole P₁ and a first illuminating body LB₁,
- a master switch IG to allow said lighting system to be powered,
- a power supply network to supply power to said first street lamps L₁, where said power supply network comprises a first power supply line, a second power supply line, a third power supply line and a fourth power supply line, where two of said power supply lines are connected to said master switch IG, in such a way that, when said master switch is activated, said two power supply lines are always active (i.e. capable of carrying electric current), so that a first voltage and is always present between said two power supply lines,
- a contactor CL, connected to said power supply network, by means of said master switch IG, and comprising at least one switch to open/close a respective power supply line, different from each power supply line always active, where said contactor CL is configured to open/close said at least one switch, in such a way that said at least one switch respectively moves from an open state, in which it interrupts the flow of electric current from said three-phase power supply network towards each first illuminating body LB₁, to a closed state, in which it allows the flow of electric current from said three-phase power supply network towards each first illuminating body LB₁, and vice versa,
- a control device AC configured to control the opening and closing of said at least one switch of said contactor CL depending on an intensity of solar radiation and/or at a predetermined time, so that said at least one contactor is open or closed,
- a plurality of power supply units A, each of which is capable to supply power to electronic devices or system and is connected to said two power supply lines always active,
- a plurality of relays R₁, each of which is connected in series to a respective first illuminating body LB₁ and is configured to switch from an open state, in which each relay interrupts the flow of electric current from said power supply network towards the respective first illuminating body LB₁, so that each first illuminating body LB₁ is turned off, to a closed state, in which each relay allows the flow of electric current from said power supply network towards the respective illuminating body LB₁, so that each first illuminating body LB₁ is turned on, and vice versa,
- a plurality of control elements MC₁, each of which is connected to one of said two power supply lines always active and to one power supply line different from said two power supply lines always active and is configured to control the opening and closing of a respective relay (R₁).

The fact that said two power supply lines are always active allow a continuous flow of electric current toward each of said power supply units A.

In other words, the contactor CL does not act on said two power supply lines and the flow of electric current on said two power supply lines is never interrupted, as no switching is possible by the contactor CL.

With particular reference to the first embodiment being described, said master switch IG serves to separate the power distribution network from the power supply network of the lighting system and the power supply network of said lighting system is a three-phase power supply network (i.e. alternating voltages are the same in the module but offset by a predetermined phase of 120°), and the two power supply lines always active are the first power supply line and the second power supply line.

In particular, said first power supply line is to the neutral N of said three-phase power supply network, said second power supply line is a first phase F1 of said three-phase power supply network, said third power supply line is a second phase F2 of said three-phase power supply network, and said fourth power supply line is a third phase F3 of said three-phase power supply network.

Thus, with reference to the first embodiment, from here onwards, reference will be made to said neutral and to said phases F1, F2, F3 (being the respective power supply lines).

With particular reference to the contactor CL, it comprises a first switch S1 to open/close said first phase F1, a second switch for S2 to open/close said second phase F2 and a third switch S3 to open/close said third phase F3.

Although not shown in Figure 1, it is not necessary that the contactor CL comprises the first switch to open/close the first phase F1. In this specific case, said contactor CL has two switches (i.e., the second switch S2 and the third switch S3) to open/close respectively the second phase F2 and the third phase F3 and is configured to open/close each of said switches.

Each switch S1,S2,S3 of the contactor CL comprises a respective first terminal T1, T2, T3 and a respective second terminal T1', T2', T3'.

In the first embodiment being disclosed, said first switch S1 has said first terminal T1 and said second terminal T1' short-circuited (so that said second power supply line is always active).

In this way, a first voltage is always present between the neutral N and the first phase F1 (whose switch S1 has the two terminals T1, T1' short-circuited), regardless of whether it is day or night.

However, instead of short-circuiting the terminals T1, T1' of the first switch S1, the first terminal T2 and the second terminal T2' of the second switch S2 or the first terminal T3 and the second terminal T3' of the third switch S3 could be short-circuited, without departing from the scope of the invention. Consequently, the first voltage would be between the neutral N and the second phase F2 or between the neutral N and the third phase F3.

The fact that the two terminals T1,T1' of the first switch S1 are short-circuited allows a flow of electric current from said power supply network toward said first illuminating body LB₁, even when the switches S1, S2, S3 of said contactor CL are open.

However, the presence of a relay R₁ (and a respective control element MC₁) for each first street lamp L₁ prevents the flow of electric current from said power supply network toward the respective first illuminating body LB₁, when each first illuminating body LB₁ is off (e.g. during the day).

According to the invention, each power supply unit A is connected to said neutral N and to said first phase F1 and each control element MC₁ is connected to said neutral N and to said second phase F2.

With particular reference to said relays R₁, each of them is connected in series to said first phase F1.

Furthermore, each of said relays R₁ is arranged within a respective pole P₁.

With particular reference to said control element MC₁, each of them is configured to open and close a respective relay R₁ in such a way that said relay switches from the open state to the closed state, when a second voltage is present between the neutral N and the second phase F2.

However, it is possible to decide to short-circuit the terminals of any switch and choose a phase whose switch does not have short-circuited terminals, to which each control element MC₁ is to be connected, without departing from the scope of the invention.

In a first alternative, it is possible to decide that said first switch S1 has the two terminals T1, T1' short-circuited and that each control element MC₁ is connected to the neutral N and the third phase F3.

In a second alternative, it is possible to decide that the second switch S2 has the two terminals T2, T2' short-circuited and that each control element MC₁ is connected to the neutral N and the first phase F1.

In a third alternative, it is possible to decide that the second switch S2 has the two terminals T2, T2' short-circuited and that each control element MC₁ is connected to the neutral N and the third phase F3.

In a fourth alternative, it is possible to decide that the third switch S3 has the two terminals T3, T3' short-circuited and that each control element MC₁ is connected to the neutral N and the first phase F1.

In a fifth alternative, it is possible to decide that the third switch S3 has the two terminals T3, T3' short-circuited and that each control element MC₁ is connected to the neutral N and the second phase F2.

Due to this structure, during the day, a first voltage is present between said neutral N and said first phase F1 and each power supply A is powered by said first voltage.

However, said contactor CL is open and each relay R₁ is open, so that said first illuminating bodies LB₁ are open.

The contactor CL is open because the control device AC is unable to control the closing of the switches S1, S2, 3 of said contactor CL due to the intensity of the solar radiation which is greater than a predetermined threshold and/or the fact that a predetermined time has not been reached (i.e. the local time set to turn on the illuminating bodies of the street lamps).

Consequently, a second voltage is not present between the second phase F2 and the neutral N and each control element MC₁ is unable to switch the respective relay R₁ from the open state and the closed state, so that the respective first illuminating body LB₁ remains off.

During the night, said first voltage is always present between said neutral N and said first phase F1 and each power supply unit A is powered by said first voltage.

However, said contactor CL is closed and each relay R₁ is closed, so that the respective first illuminating body LB₁ is turned on.

The contactor CL is closed because the control device AC has controlled the closing of the switches S1, S2, S3 of said contactor CL due to the intensity of the solar radiation which is less than a predetermined threshold and/or a predetermined time has been reached (i.e. the local time set to turn on the illuminating bodies of the street lamps).

Consequently, a second voltage is present between the neutral N and the second phase F2 and each control element MC₁ has controlled the switching of the respective relay R₁ from the open state to the closed state, so that the respective first illuminating body LB₁ is turned on.

In other words, regardless of day or night, each power supply unit A is always powered by said first voltage. This is because each power supply unit A is connected to the neutral N and the first phase F1 (whose switch has the short-circuited terminals).

In fact, the fact that each power supply unit A is connected to the first phase F1 ensures the presence of said first voltage, regardless of whether the switches S1, S2, S3 of said contactor CL are open or closed.

Advantageously, the power supply network is not completely under voltage during day and night.

In the first embodiment being disclosed, as already said, the contactor CL is connected to the power supply network by means of said master switch IG.

Furthermore, said master switch IG and said contactor CL are arranged within a cabinet CB.

Furthermore, in the first embodiment, being disclosed, said control device AC comprises a crepuscular switch configured to open said contactor CL, when the intensity of solar radiation is higher than a predetermined threshold, and close said contactor CL, when the intensity of solar radiation is lower than said predetermined threshold.

In a first alternative (not shown), said control device AC can comprise an astronomic time switch configured to open said contactor CL at a predetermined time and to close the said contactor CL at a predetermined further time.

In a second alternative (not shown), said control device AC can comprise a crepuscular switch and an astronomic time switch, connected in parallel to each other (said connection is called "wired or connection"), in such a way that said control device AC opens said contactor CL when the intensity of solar radiation is higher than a predetermined threshold and closes said contactor CL when the intensity of the solar radiation is lower than said predetermined threshold or opens said contactor at a predetermined time and closes it at a predetermined further time.

In other words, in such a second alternative, said control device AC controls said contactor CL on the basis of the intensity of the solar radiation or on the basis of the local time.

Furthermore, said lighting system comprises for each first street lamp L₁ a respective first junction box PZ₁ and a respective first terminal board M₁.

Each first terminal board M₁ ha a first input for receiving said first power supply line F1, a second input for receiving said second power supply line F2, a third input for receiving said third power supply line F3, and a further input for receiving said neutral N.

In particular, each first terminal board M₁ has at least one first output to allow the output of said first power supply line F1 (connected to each relay R₁, the latter connected in turn to the respective illuminating body LB₁), a second output to allow the output of said second power supply line F2 (connected to each control element MC₁ of the respective relay R₁) and a further output to allow the output of the neutral N (connected to each illuminating body LB₁ and to each control element MC₁).

In the first embodiment being disclosed, each first terminal board M₁ is arranged within the first pole P₁ of a respective first street lamp each power supply unit A is arranged between a respective first terminal board M₁ and a respective relay R₁ and each relay R₁ is arranged between the respective first terminal board M₁ and the respective first illuminating body LB₁.

However, although not shown in Figures, each first terminal board M₁ and each relay R₁ can be arranged within a respective first junction box PZ₁, positioned within a respective waterproof casing.

In any case, each power supply unit A is connected to said first power supply line always active and to said second power supply line always active and is arranged upstream of a respective relay (i.e. prior to the input of the respective relay) in such a way to be always powered by said power supply network and each relay R1 is arranged between the respective first terminal board M₁ and the respective first illuminating body LB₁.

Although in the first embodiment being described, the lighting system comprises a plurality of first street lamps and a plurality of power supply units A, each of which is connected to a respective first street lamp, said lighting system can comprise any number of lamps, even a single street lamp L₁, and any number of power supply units A, even a single power supply unit.

Furthermore, it is not necessary that a power supply unit A is connected to each first street lamp, however it is necessary that each first street lamp L₁ is provided with a respective relay R₁ and accordingly with a respective control element MC₁ to control the opening and closing of said relay R₁.

Furthermore, as it can be seen from Figure 1, the lighting system comprises at least one second street lamp L₂ and at least one third street lamp L₃.

Each second street lamp L₂ comprises a respective second pole P₂ and a respective second illuminating body LB₂.

However, no relay (nor any control element for the relay) is provided for the respective second illuminating body LB₂, nor a power supply unit is connected to said second street lamp L₂ (although a power supply unit can be connected to said second street lamp, without departing from the scope of the invention).

The three-phase power supply network provides electric current to each second street lamp P₂ by the voltage between said neutral N and said second phase F2.

Furthermore, for each second street lamp P2, said lighting system comprises a respective second junction box PZ₂ and a respective second terminal block M₂.

Differently from the first terminal board M₁, said second terminal board M₂ has at least a first output to allow the output of said second phase F2 (connected to each second illuminating body LB₂) and a further output to allow the output of said neutral N (connected to each second illuminating body LB₂).

Each third street lamp L₃ comprises a respective third pole P3 and a respective third illuminating body LB₃.

However, no relay (or any control element for the relay) is provided for the respective third illuminating body LB₃ nor a power supply unit is connected to said third street lamp L₃ (although a power supply unit can be connected to said third street lamp, without departing from the scope of the invention).

The three-phase power supply network provides electric current to each third street lamp L₃ by the voltage between said neutral N and said third phase F3.

Moreover, for each third street lamp L₃, said lighting system comprises a respective third junction box PZ₃ and a respective third terminal board M₃.

Differently from the first terminal board M₁, said third terminal board M₃ has at least a first output to allow the output of said third phase F3 (connected to each third illuminating body LB₃), and a further output to allow the output of said neutral N (connected to each third illuminating body LB₃).

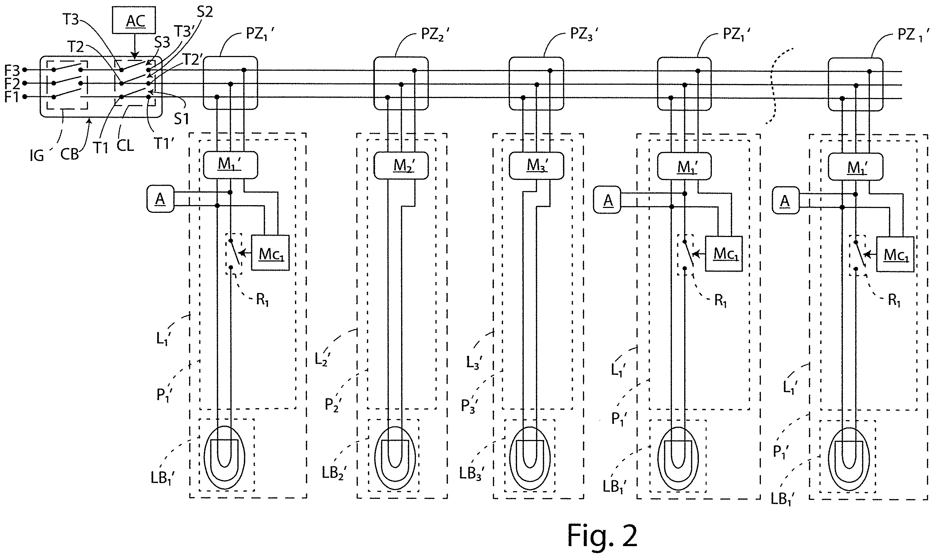

Figure 2 shown a second embodiment of the lighting system, object of the invention.

Similar to the first embodiment above disclosed, in the second embodiment said power supply network is a three-phase power supply network (i.e. alternating voltages are the same in the module but offset by a predetermined phase of 120°), where the first power supply line and the second power supply line are always active.

In the second embodiment, the contactor CL is connected to the phases F1 ,F2,F3 by means of the master switch IG.

As in the first embodiment, said master switch IG and said contactor CL are arranged inside a cabinet CB.

However, differently from the first embodiment above disclosed, the three-phase power supply network is without neutral N, said first power supply line is a first phase F1 of said three-phase power supply network, said second power supply line is a second phase F2 of said three-phase power supply network, and said third power supply line is a third phase F3 of said three-phase power supply network.

Thus, with reference to the second embodiment, from here onwards, reference will be made to said phases F1, F2, F3 (being the respective power supply lines).

In this second embodiment, in addition to the terminals of the first switch S1 short-circuited, also the second switch S2 has its first terminal T2 and its second terminal T2' short-circuited.

As a result, the only switch that does not have short-circuited terminals is the third switch S3.

Although not shown in Figure 2, it is not necessary that the contactor CL comprises the first switch to open/close the first phase F1 and the second switch to open/close the second phase F2. In this specific case, said contactor CL has a switch (i.e. the third switch S3) to open/close respectively the third phase F3 and is configured to open/close said switch.

Differently from the first embodiment, said power supply unit A is connected to said first phase F1 and said second phase and each relay R₁ is connected in series to said second phase F2 and said first illuminating body LB₁' of a respective first street lamp L₁'.

Each control element MC₁ is connected to said third phase F3 and to said first phase F1 and controls the closing of the respective relay R₁ when a second voltage is present between said third phase F3 and said first phase F1.

However, although not shown, each relay R₁ can be connected in series to the first phase F1 and the first illuminating body LB₁' of a respective first street lamp L₁', without departing from the scope of the invention.

In this case, each control element MC₁ is connected to said third phase F3 and said second phase F2 and controls the closing of the respective relay R₁ when a second voltage is present between said third phase F3 and said second phase F2.

Similarly to the first embodiment, in the second embodiment being described, each first terminal board M₁' has a first input for receiving said first phase F1, a second input for receiving said second phase F2, and a third input for receiving said third phase F3.

In particular, each first terminal board M₁' ha at least one first output to allow the output of the first phase F1, and a second output to allow the output of second phase F2 (connected to each relay R₁) and a third output to allow the output of said third phase F3 (connected to each control element MC₁).

Furthermore, each first terminal board M₁' is arranged within the first pole P₁' of a respective first street lamp L₁' and each power supply unit A is arranged between a respective first terminal board M₁' and a respective relay R₁'.

Furthermore, as can be seen from Figure 2, the lighting system comprises at least a second street lamp L₂' and at least one third street lamp L₃'.

Each second street lamp L₂' comprises a respective second pole P₂' and a respective second illuminating body LB₂'.

However, no relay (nor any control element for the relay) is provided for the second illuminating body LB₂, nor a power supply unit is connected to said second street lamp L₂' (although a power supply unit can be connected to said second street lamp, without departing from the scope of invention).

The three-phase power supply network provides electric current to each second street lamp L₂' by means of the voltage between said first phase F1 and said third phase F3.

Furthermore, for each second street lamp L₂', said lighting system comprises a respective junction box PZ₂' and a respective second terminal board M₂'.

Differently from each second terminal board M₂ of the first embodiment, in the second embodiment each second terminal board M₂' has at least one first output to allow the output of said first phase F1 (connected to each second illuminating body LB₂') and a second output to allow the output of said third phase F3 (connected to each second illuminating body LB₂').

Each third street lamp L₃' comprises a respective third pole P₃' and a respective third illuminating body LB₃'.

However, no relay (nor any control element for the relay) for the respective third illuminating body LB₃' nor a power supply unit is connected to said street lamp L₃' (although a power supply unit can be connected to said third street lamp, without departing from the scope of the invention).

The three-phase power supply network provides electric current to each third street lamp L₃' by means of the voltage between said second phase F2 and said third phase F3.

Furthermore, for each third street lamp L₃', said lighting system comprises a respective third junction box PZ₃' and a respective third terminal board M₃'.

Differently from each third terminal board M₃ of the first embodiment, in the second embodiment each third terminal board M₃' has at least one a first output to allow the output of said second phase F2 (connected to each third illuminating body LB₃') and a second output to allow the output of said third phase F3 (connected to each third illuminating body LB₃').

With reference to the embodiments above disclosed, each illuminating body comprises a light source.

However, although not shown, each illuminating body can comprise a plurality of light sources, without thereby departing from the scope of the invention.

Furthermore, with reference to the embodiments above described, pole means any support element configured to support a respective illuminating body.

Advantageously, the structure of said lighting system allows to supply power during day and night to one or more power supply units capable of supplying power to electronic devices or systems, connected to said power supply units, without the entire three-phase power supply network is under voltage day and night.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Lighting system comprising:
- one or more first street lamps (L₁, L₁'), each of which comprises a first pole (P₁, P_{1'}) and a first illuminating body (LB₁, LB₁'),
- a master switch (IG),
- a three-phase power supply network for supplying said one or more first street lamps (L₁,L₁'), comprising at least one first power supply line (N; F1), a second power supply line (F1; F2) and a third power supply line (F2; F3), where said first power supply line (N; F1) and said second power supply line (F1; F2) are connected to said master switch (IG) in such a way that, when said master switch (IG) is activated, said first power supply line (N; F1) and said second power supply line (F1; F2) are always active, so that a first voltage is always present between said first power supply line (N; F1) and said second power supply line (F1; F2);
- a contactor (CL), connected to said three-phase power supply network, by means of said master switch (IG), and comprising at least one switch (S1,S2,S3) to open/close said third power supply line (F2; F3); where said contactor (CL) is configured to open and close said at least one switch, so as to respectively move from an open state, in which it interrupts the flow of electric current from said three-phase power supply network towards each first illuminating body (LB₁,LB₁'), to a closed state, in which it allows the flow of electric current from said three-phase power supply network towards each first illuminating body (LB₁,LB₁'), and vice versa;
- a control device (AC) configured to control the opening and closing of said at least one switch (S1,S2,S3) of said contactor (CL) depending on a intensity of solar radiation and/or at a predetermined time;
- at least one power supply unit (A) to supply power to electronic devices or systems,
- one or more relays (R₁), each of which is connected in series to a respective first illuminating body (LB₁, LB₁') and is configured to switch from an open state, in which each of said relays interrupts the flow of electric current from said three-phase power supply network towards the respective first illuminating body (LB_{1,}LB₁'), to a closed state, in which each of said relays allows the flow of electric current from said three-phase power supply network towards the respective illuminating body (LB₁,LB₁'), and vice versa;
- one or more control elements (MC₁), each of which is configured to control the opening and closing of a respective relay (R₁),
where
said at least one power supply unit (A) is connected to said first power supply line (N; F1) and to said second power supply line (F1; F2),
each relay (R1) is connected in series to said second power supply line (F1; F2) or to said first power supply line (N; F1),
each control element (MC₁) is connected to said first power supply line (N; F1) and to said third power supply line (F2; F3) or to said second power supply line (F1; F2) and to said third power supply line (F2; F3) and is configured to control the closing of the respective relay (R₁), when a second voltage is present between said first power supply line (N; F1) and said third power supply line (F2; F3) or between said second power supply line (F1; F2) and said third power supply line (F2; F3).

2. Lighting system according to claim 1, **characterised in that**
said three-phase power supply network comprises a first phase (F1), a second phase (F2) and a neutral (N), where said first power supply line (N; F1) is said neutral (N), said second power supply line (F1; F2) is said first phase (F1) and said third power supply line (F2; F3) is said second phase (F2), so that
said first voltage is present between said neutral (N) and said first phase (F1),
said at least one power supply unit (A) is connected to said neutral (N) and to said first phase (F1),
each relay (R₁) is connected in series to said first phase (F1),
each control element (MC₁) is connected to said neutral (N) and to said second phase (F2) and is configured to control the closing of the respective relay (R₁), when a second voltage is present between said neutral (N) and said second phase (F2).

3. Lighting system according to claim 1, **characterised in that**
said three-phase power supply network comprises a first phase (F1), a second phase (F2), and a third phase (F3), where said first power supply line (N; F1) is said first phase (F1), said second power supply line (F1; F2) is said second phase (F2), and said third power supply line (F2; F3) is said third phase (F3), so that
said first voltage is present between said first phase (F1) and said second phase (F2),
said at least one power supply unit (A) is connected to said first phase (F1) and to said second phase (F2),
each relay (R₁) is connected in series to said second phase (F2),
each control element (MC₁) is connected to said first phase (F1) and said third phase (F3) or to said second phase (F2) and to said third phase (F3) and is configured to control the closing of the respective relay (R₁), when a second voltage is present between said first phase (F1) and said third phase (F3) or between said second phase (F2) and said third phase (F3).

4. Lighting system according to any one of claims 1-3, **characterised in that** said control device (AC) comprises a crepuscular switch configured to open said contactor (CL) when the intensity of solar radiation is higher than a predetermined threshold and close said contactor (CL) when the intensity of solar radiation is lower than said predetermined threshold.

5. Lighting system according to any one of claims 1-3, **characterized in that** said control device (AC) comprises an astronomic time switch configured to open said contactor (CL) at a predetermined time and to close said contactor (CL) at a predetermined further time.

6. Lighting system according to any one of claims 1-3, **characterized in that** said control device (AC) comprises a crepuscular switch configured to open said contactor (CL) when the intensity of solar radiation is higher than a predetermined threshold and close said contactor (CL) when the intensity of solar radiation is lower than said predetermined threshold, and an astronomic time switch configured to open said contactor (CL) at a predetermined time and to close said contactor (CL) at a predetermined further time, where said crepuscular switch and said astronomic time switch are connected in parallel in such a way that said control device (AC) opens/closes said contactor depending on the intensity of solar radiation or local time.

7. Lighting system according to any one of the previous claims, **characterised in that** each first street lamp (L₁,L₁') comprises a respective first junction box (PZ₁, PZ₁') and a respective first terminal board (M₁, M₁'); each first terminal board (M₁, M₁') comprising a first input for receiving said first power supply line (N; F1), a second input for receiving said second power supply line (F1; F2), a third input for receiving said third power supply line (F2; F3), as well as a first output to allow the output of said first power supply line (N; F1), a second output to allow the output of said second power supply line (F1; F2) and a third output to allow the output of said third power supply line (F2; F3).

8. Lighting according to claim 7, **characterised in that** each first terminal board (M₁,M₁') is arranged within a respective first pole (P₁, P₁'), **in that** said at least one power supply unit (A) is positioned between a respective first terminal board (M₁, M₁') and a respective relay (R₁), and **in that** each relay (R₁) is arranged between the respective first terminal board (M₁, M₁') and the respective first illuminating body (LB₁, LB_{1'}).

9. Lighting system according to claim 7, **characterized in that** each first terminal board (M₁, M₁') and the respective relay (R1) are arranged within a respective first junction box (PZ₁, PZ_{1'}), where each first terminal board (M₁, M₁') and the respective relay (R₁) are positioned within a respective waterproof casing, and **in that** said at least one power supply unit (A) is positioned between a respective first terminal (M₁, M₁') and a respective relay (R₁).

## Patentansprüche

1. Beleuchtungssystem, umfassend:
- eine oder mehrere erste Straßenlaternen (L₁, L₁'), wobei jede einen ersten Mast (P₁, P₁') und einen ersten Beleuchtungskörper (LB₁, LB₁') umfasst,
- einen Hauptschalter (IG),
- ein Dreiphasenstromversorgungsnetz zum Versorgen der einen oder mehreren Straßenlaternen (L₁, L₁'), umfassend zumindest eine erste Stromversorgungsleitung (N; F1), eine zweite Stromversorgungsleitung (F1; F2) und eine dritte Stromversorgungsleitung (F2; F3), wobei die erste Stromversorgungsleitung (N; F1) und die zweite Stromversorgungsleitung (F1; F2) mit dem Hauptschalter (IG) auf eine solche Weise verbunden sind, dass, wenn der Hauptschalter (IG) aktiviert ist, die erste Stromversorgungsleitung (N; F1) und die zweite Stromversorgungsleitung (F1; F2) immer aktiv sind, sodass eine erste Spannung zwischen der ersten Stromversorgungsleitung (N; F1) und der zweiten Stromversorgungsleitung (F1; F2) immer vorhanden ist;
- einen Schaltschütz (CL), welcher mit dem Dreiphasenstromversorgungsnetz mithilfe des Hauptschalters (IG) verbunden ist, und welcher zumindest einen Schalter (S1, S2, S3) umfasst, um die dritte Stromversorgungsleitung (F2; F3) zu öffnen/schließen; wobei der Schaltschütz (CL) konfiguriert ist, um den zumindest einen Schalter zu öffnen und zu schließen, um jeweils von einem offenen Zustand, in welchem er den Fluss von elektrischem Strom von dem Dreiphasenstromversorgungsnetz zu jedem ersten Beleuchtungskörper (LB₁, LB₁') hin unterbricht, auf einen geschlossenen Zustand, in welchem er den Fluss von elektrischem Strom von dem Dreiphasenstromversorgungsnetz zu jedem ersten Beleuchtungskörper (LB₁, LB₁') hin erlaubt, und umgekehrt zu wechseln;
- eine Steuervorrichtung (AC), welche konfiguriert ist, um das Öffnen und Schließen des zumindest einen Schalters (S1, S2, S3) des Schaltschützes (CL) abhängig von einer Intensität von Sonnenstrahlung und/oder zu einer vorbestimmten Zeit zu steuern;
- zumindest eine Stromversorgungseinheit (A) um elektronische Vorrichtungen oder Systeme mit Strom zu versorgen,
- ein oder mehrere Relais (R₁), wobei jedes mit einem entsprechenden ersten Beleuchtungskörper (LB₁, LB₁') in Serie geschaltet ist und konfiguriert ist, um von einem offenen Status, in welchem jedes der Relais den Fluss von elektrischem Strom von dem Dreiphasenstromversorgungsnetz zu dem entsprechenden ersten Beleuchtungskörper (LB₁, LB₁') hin unterbricht, zu einem geschlossenen Zustand, in welchem jedes der Relais den Fluss von elektrischem Strom von dem Dreiphasenstromversorgungsnetz zu dem entsprechenden Beleuchtungskörper (LB₁, LB₁') hin erlaubt, und umgekehrt zu wechseln;
- ein oder mehrere Steuerelemente (MC₁), wobei jedes konfiguriert ist, um das Öffnen und Schließen eines entsprechenden Relais (R₁) zu steuern,
wobei
die zumindest eine Stromversorgungseinheit (A) mit der ersten Stromversorgungsleitung (N; F1) und mit der zweiten Stromversorgungsleitung (F1; F2) verbunden ist,
jedes Relais (R₁) mit der zweiten Stromversorgungsleitung (F1; F2) oder mit der ersten Stromversorgungsleitung (N; F1) in Serie geschaltet ist,
jedes Steuerelement (MC₁) mit der ersten Stromversorgungsleitung (N; F1) und mit der dritten Stromversorgungsleitung (F2; F3) oder mit der zweiten Stromversorgungsleitung (F1; F2) und mit der dritten Stromversorgungsleitung (F2; F3) verbunden ist und konfiguriert ist, um das Schließen des entsprechenden Relais (R₁) zu steuern, wenn eine zweite Spannung zwischen der ersten Stromversorgungsleitung (N; F1) und der dritten Stromversorgungsleitung (F2; F3) oder zwischen der zweiten Stromversorgungsleitung (F1; F2) und der dritten Stromversorgungsleitung (F2; F3) vorhanden ist.

2. Beleuchtungssystem nach Anspruch 1, **dadurch gekennzeichnet, dass** das Dreiphasenstromversorgungsnetz eine erste Phase (F1), eine zweite Phase (F2) und einen Neutralleiter (N) umfasst, wobei die erste Stromversorgungsleitung (N; F1) der Neutralleiter (N) ist, die zweite Stromversorgungsleitung (F1; F2) die erste Phase (F1) ist, und die dritte Stromversorgungsleitung (F2; F3) die zweite Phase (F2) ist, sodass
die erste Spannung zwischen dem Neutralleiter (N) und der ersten Phase (F1) vorhanden ist,
die zumindest eine Stromversorgungseinheit (A) mit dem Neutralleiter (N) und mit der ersten Phase (F1) verbunden ist,
jedes Relais (R₁) mit der ersten Phase (F1) in Serie geschaltet ist,
jedes Steuerelement (MC₁) mit dem Neutralleiter (N) und mit der zweiten Phase (F2) verbunden ist und konfiguriert ist, um das Schließen des entsprechenden Relais (R₁) zu steuern, wenn eine zweite Spannung zwischen dem Neutralleiter (N) und der zweiten Phase (F2) vorhanden ist.

3. Beleuchtungssystem nach Anspruch 1, **dadurch gekennzeichnet, dass** das Dreiphasenstromversorgungsnetz eine erste Phase (F1), eine zweite Phase (F2) und eine dritte Phase (F3) umfasst, wobei die erste Stromversorgungsleitung (N; F1) die erste Phase (F1) ist, die zweite Stromversorgungsleitung (F1; F2) die zweite Phase (F2) ist, und die dritte Stromversorgungsleitung (F2; F3) die dritte Phase (F3) ist, sodass
die erste Spannung zwischen der ersten Phase (F1) und der zweiten Phase (F2) vorhanden ist,
die zumindest eine Stromversorgungseinheit (A) mit der ersten Phase (F1) und mit der zweiten Phase (F2) verbunden ist,
jedes Relais (R₁) mit der zweiten Phase (F2) in Serie geschaltet ist,
jedes Steuerelement (MC₁) mit der ersten Phase (F1) und mit der dritten Phase (F3) oder mit der zweiten Phase (F2) und mit der dritten Phase (F3) verbunden ist und konfiguriert ist, um das Schließen des entsprechenden Relais (R₁) zu steuern, wenn eine zweite Spannung zwischen der ersten Phase (F1) und der dritten Phase (F3) oder zwischen der zweiten Phase (F2) und der dritten Phase (F3) vorhanden ist.

4. Beleuchtungssystem nach einem der Ansprüche 1-3, **dadurch gekennzeichnet, dass** die Steuervorrichtung (AC) einen Dämmerungsschalter umfasst, welcher konfiguriert ist, um den Schaltschütz (CL) zu öffnen, wenn die Intensität von Sonnenstrahlung höher ist als eine vorbestimmte Schwelle, und den Schaltschütz (CL) zu schließen, wenn die Intensität von Sonnenstrahlung niedriger ist als die vorbestimmte Schwelle.

5. Beleuchtungssystem nach einem der Ansprüche 1-3, **dadurch gekennzeichnet, dass** die Steuervorrichtung (AC) eine astronomische Schaltuhr umfasst, welche konfiguriert ist, um den Schaltschütz (CL) zu einer vorbestimmten Zeit zu öffnen und den Schaltschütz (CL) zu einer vorbestimmten weiteren Zeit zu schließen.

6. Beleuchtungssystem nach einem der Ansprüche 1-3, **dadurch gekennzeichnet, dass** die Steuervorrichtung (AC) einen Dämmerungsschalter, welcher konfiguriert ist, um den Schaltschütz (CL) zu öffnen, wenn die Intensität von Sonnenstrahlung höher ist als eine vorbestimmte Schwelle, und den Schaltschütz (CL) zu schließen, wenn die Intensität von Sonnenstrahlung niedriger ist als die vorbestimmte Schwelle, und eine astronomische Schaltuhr, welche konfiguriert ist, um den Schaltschütz (CL) zu einer vorbestimmten Zeit zu öffnen und den Schaltschütz (CL) zu einer vorbestimmten weiteren Zeit zu schließen, umfasst, wobei der Dämmerungsschalter und die astronomische Schaltuhr auf eine solche Weise parallel geschaltet sind, dass die Steuervorrichtung (AC) den Schaltschütz abhängig von der Intensität von Sonnenstrahlung oder lokaler Zeit öffnet/schließt.

7. Beleuchtungssystem nach einem der vorstehenden Ansprüche, **dadurch gekennzeichnet, dass** jede erste Straßenlaterne (L₁, L₁') einen entsprechenden ersten Anschlusskasten (PZ₁, PZ₁') und eine entsprechende erste Klemmenplatte (M₁, M₁') umfasst; wobei jede erste Klemmenplatte (M₁, M₁') einen ersten Eingang zum Empfangen der ersten Stromversorgungsleitung (N; F1), einen zweiten Eingang zum Empfangen der zweiten Stromversorgungsleitung (F1; F2), einen dritten Eingang zum Empfangen der dritten Stromversorgungsleitung (F2; F3), sowie einen ersten Ausgang, um die Ausgabe der ersten Stromversorgungsleitung (N; F1) zu erlauben, einen zweiten Ausgang, um die Ausgabe der zweiten Stromversorgungsleitung (F1; F2) zu erlauben, und einen dritten Ausgang, um die Ausgabe der dritten Stromversorgungsleitung (F2; F3) zu erlauben, umfasst.

8. Beleuchtung nach Anspruch 7, **dadurch gekennzeichnet, dass** jede erste Klemmenplatte (M₁,M₁') innerhalb eines entsprechenden ersten Mastes (P₁, P₁') angeordnet ist, dass die zumindest eine Stromversorgungseinheit (A) zwischen einer entsprechenden Klemmenplatte (M₁, M₁') und einem entsprechenden Relais (R₁) angeordnet ist, und dass jedes Relais (R₁) zwischen der entsprechenden ersten Klemmenplatte (M₁, M₁') und dem entsprechenden ersten Beleuchtungskörper (LB₁, LB₁') angeordnet ist.

9. Beleuchtungssystem nach Anspruch 7, **dadurch gekennzeichnet, dass** jede erste Klemmenplatte (M₁, M₁') und das entsprechende Relais (R₁) innerhalb eines entsprechenden ersten Anschlusskastens (PZ₁, PZ₁') angeordnet sind, wobei jede erste Klemmenplatte (M₁, M₁') und das entsprechende Relais (R₁) innerhalb eines entsprechenden wasserdichten Gehäuses positioniert sind, und dass die zumindest eine Stromversorgungseinheit (A) zwischen einer entsprechenden ersten Klemmenplatte (M₁, M₁') und einem entsprechenden Relais (R₁) positioniert ist.

## Revendications

1. Système d'éclairage comprenant :
- un ou plusieurs premiers réverbères (L₁, L₁'), chacun d'eux comprenant un premier pôle (P₁, P₁') et un premier corps éclairant (LB₁, LB₁'),
- un commutateur maître (IG),
- un réseau d'alimentation électrique triphasée pour alimenter lesdits un ou plusieurs premiers réverbères (L₁, L₁'), comprenant au moins une première ligne d'alimentation électrique (N ; F1), une deuxième ligne d'alimentation électrique (F1 ; F2) et une troisième ligne d'alimentation électrique (F2; F3), où ladite première ligne d'alimentation électrique (N ; F1) et ladite deuxième ligne d'alimentation électrique (F1 ; F2) sont connectées audit commutateur maître (IG) de manière à ce que, lorsque ledit commutateur maître (IG) est activé, ladite première ligne d'alimentation électrique (N ; F1) et ladite et ladite deuxième ligne d'alimentation électrique (F1; F2) sont toujours actives, de sorte qu'une première tension est toujours présente entre ladite première ligne d'alimentation électrique (N ; F1) et ladite et ladite deuxième ligne d'alimentation électrique (F1 ; F2) ;
- un contacteur (CL), connecté audit réseau d'alimentation électrique triphasée, au moyen dudit commutateur maître (IG), et comprenant au moins un commutateur (S1, S2, S3) pour ouvrir/fermer ladite troisième ligne d'alimentation électrique (F2 ; F3) ; où ledit contacteur (CL) est configuré pour ouvrir et fermer ledit au moins un commutateur, de manière à se déplacer respectivement d'un premier état ouvert, où il interrompt la circulation de courant électrique dudit réseau d'alimentation électrique triphasée vers chaque premier corps éclairant (LB₁, LB₁'), vers un état fermé, où il permet la circulation de courant électrique dudit réseau d'alimentation électrique triphasée vers chaque premier corps éclairant (LB₁, LB₁'), et inversement ;
- un dispositif de commande (AC) configuré pour commander l'ouverture et la fermeture dudit au moins un commutateur (S1, S2, S3) dudit contacteur (CL) en fonction d'une intensité de rayonnement solaire et/ou à une heure prédéterminée ;
- au moins une unité d'alimentation électrique (A) pour alimenter en électricité des dispositifs ou systèmes électroniques,
- ou plusieurs relais (R₁), chacun d'eux étant connecté en série à un premier corps éclairant (LB₁, LB₁') respectif et étant configuré pour commuter d'un état ouvert, où chacun desdits relais interrompt la circulation de courant électrique du réseau d'alimentation électrique triphasée vers le premier corps éclairant (LB₁, LB₁') respectif, vers un état fermé, où chacun desdits relais permet la circulation de courant électrique dudit réseau d'alimentation électrique triphasée vers le corps éclairant (LB₁, LB₁') respectif, et inversement ;
- un ou plusieurs éléments de commande (MC₁), chacun d'eux étant configuré pour commander l'ouverture et la fermeture d'un relais (R₁) respectif,
où
ladite au moins une unité d'alimentation électrique (A) est connectée à ladite première unité d'alimentation électrique (N ; F1) et à ladite seconde ligne d'alimentation électrique (F1; F2), chaque relais (R₁) est connecté en série à ladite deuxième ligne d'alimentation électrique (F1; F2) ou à ladite première ligne d'alimentation électrique (N ; F1),
chaque élément de commande (MC₁) est connecté à ladite première ligne d'alimentation électrique (N ; F1) et à ladite troisième ligne d'alimentation électrique (F2 ; F3) ou à ladite deuxième ligne d'alimentation électrique (F1; F2) et à ladite troisième ligne d'alimentation électrique (F2 ; F3) et est configuré pour commander la fermeture du relais (R₁) respectif, lorsqu'une seconde tension est présente entre ladite première ligne d'alimentation électrique (N ; F1) et ladite troisième ligne d'alimentation électrique (F2; F3) ou entre ladite deuxième ligne d'alimentation électrique (F1 ; F2) et ladite troisième ligne d'alimentation électrique (F2 ; F3).

2. Système d'éclairage selon la revendication 1, **caractérisé en ce que**
ledit réseau d'alimentation électrique triphasée comprend une première phase (F1), une deuxième phase (F2) et un neutre (N), où ladite première ligne d'alimentation électrique (N ; F1) est ledit neutre (N), ladite deuxième phase d'alimentation électrique (F1 ; F2) est ladite première phase (F1) et ladite troisième ligne d'alimentation électrique (F2 ; F3) est ladite deuxième phase (F2), de sorte que
ladite première tension est présente entre ledit neutre (N) et ladite première phase (F1),
ladite au moins une unité d'alimentation électrique (A) est connectée audit neutre (N) et à ladite première phase (F1),
chaque relais (R₁) est connecté en série à ladite première phase (F1),
chaque élément de commande (MC₁) est connecté audit neutre (N) et à ladite deuxième phase (F2) et est configuré pour commander la fermeture du relais (R₁) respectif, lorsqu'une seconde tension est présente entre ledit neutre (N) et ladite deuxième phase (F2).

3. Système d'éclairage selon la revendication 1, **caractérisé en ce que**
ledit réseau d'alimentation électrique triphasée comprend une première phase (F1), une deuxième phase (F2) et une troisième phase (F3), où ladite première ligne d'alimentation électrique (N ; F1) est ladite première phase (F1), ladite deuxième ligne d'alimentation électrique (F1; F2) est ladite deuxième phase (F2) et ladite troisième ligne d'alimentation électrique (F2 ; F3) est ladite troisième phase (F3), de sorte que
ladite première tension est présente entre ladite première phase (F1) et ladite deuxième phase (F2),
ladite au moins une unité d'alimentation électrique (A) est connectée à ladite première phase (F1) et à ladite deuxième phase (F2),
chaque relais (R₁) est connecté en série à ladite deuxième phase (F2),
chaque élément de commande (MC₁) est connecté à ladite première phase (F1) et à ladite troisième phase (F3) ou à ladite deuxième phase (F2) et à ladite troisième phase (F3) et est configuré pour commander la fermeture du relais (R₁) respectif, lorsqu'une seconde tension est présente entre ladite première phase (F1) et ladite troisième phase (F3) ou entre ladite deuxième phase (F2) et ladite troisième phase (F3).

4. Système d'éclairage selon l'une quelconque des revendications 1-3, **caractérisé en ce que** ledit dispositif de commande (AC) comprend un commutateur crépusculaire configuré pour ouvrir ledit contacteur (CL) lorsque l'intensité de rayonnement solaire est supérieure à un seuil prédéterminé et fermer ledit contacteur (CL) lorsque l'intensité de rayonnement solaire est inférieure audit seuil prédéterminé.

5. Système d'éclairage selon l'une quelconque des revendications 1-3, **caractérisé en ce que** ledit dispositif de commande (AC) comprend un commutateur de temps astronomique configuré pour ouvrir ledit contacteur (CL) à une heure prédéterminée et pour fermer ledit contacteur (CL) à une autre heure prédéterminée.

6. Système d'éclairage selon l'une quelconque des revendications 1-3, **caractérisé en ce que** ledit dispositif de commande (AC) comprend un commutateur crépusculaire configuré pour ouvrir ledit contacteur (CL) lorsque l'intensité de rayonnement solaire est supérieure à un seuil prédéterminé et fermer ledit contacteur (CL) lorsque l'intensité de rayonnement solaire est inférieure audit seuil prédéterminé, et un commutateur de temps astronomique configuré pour ouvrir ledit contacteur (CL) à une heure prédéterminée et pour fermer ledit contacteur (CL) à une autre heure prédéterminée, où ledit commutateur crépusculaire et ledit commutateur de temps astronomique sont connectés en parallèle de manière à ce que ledit dispositif de commande (AC) ouvre/ferme ledit contacteur en fonction de l'intensité de rayonnement solaire ou de l'heure locale.

7. Système d'éclairage selon l'une quelconque des revendications précédentes, **caractérisé en ce que** chaque premier réverbère (L₁, L₁') comprend une première boîte de jonction (PZ₁, PZ₁') et une première plaque à bornes (M₁, M₁') respective ; chaque première plaque à bornes (M₁, M₁') comprenant une première entrée pour recevoir ladite première ligne d'alimentation électrique (N ; F1), une deuxième entrée pour recevoir ladite deuxième ligne d'alimentation électrique (F1; F2), une troisième entrée pour recevoir ladite troisième ligne d'alimentation électrique (F2 ; F3), ainsi qu'une première sortie pour permettre la sortie de ladite première ligne d'alimentation électrique (N ; F1), une deuxième sortie pour permettre la sortie de ladite deuxième ligne d'alimentation électrique (F1; F2) et une troisième sortie pour permettre la sortie de ladite troisième ligne d'alimentation électrique (F2 ; F3).

8. Système d'éclairage selon la revendication 7, **caractérisé en ce que** chaque première plaque à bornes (M₁, M₁') est agencée au sein d'un premier pôle (P₁, P₁') respectif, **en ce que** ladite au moins une unité d'alimentation électrique (A) est positionnée entre une première plaque à bornes (M₁, M₁') respective et un relais (R₁) respectif, et **en ce que** chaque relais (R₁) est agencé entre la première plaque à bornes (M₁, M₁') respective et le premier corps éclairant (LB₁, LB₁') respectif.

9. Système d'éclairage selon la revendication 7, **caractérisé en ce que** chaque première plaque à bornes (M₁, M₁') et le relais (R₁) respectif sont agencés au sein d'une première boîte de jonction (PZ₁, PZ₁') respective, où chaque première plaque à bornes (M₁, M₁') et le relais (R₁) respectif sont positionnés au sein d'un boîtier étanche respectif, et **en ce que** ladite au moins une unité d'alimentation électrique (A) est positionnée entre une première borne (M₁, M₁') respective et un relais (R₁) respectif.
